# EUROPÄISCHE PATENTSCHRIFT

(11) **EP 3 833 871 B1**
(45) Veröffentlichungstag und Bekanntmachung des Hinweises auf die Patenterteilung: **07.09.2022**
(21) Anmeldenummer: 19742529.1
(22) Anmeldetag: 02.07.2019
(51) Int. Cl.: F04B 49/06, F04B 49/08, F04B 51/00

(54) **VERFAHREN ZUR FUNKTIONSÜBERWACHUNG EINES KOMPRESSORS**
METHOD FOR MONITORING THE FUNCTIONING OF A COMPRESSOR
PROCÉDÉ DE SURVEILLANCE DU FONCTIONNEMENT D'UN COMPRESSEUR

(30) Priorität: 09.08.2018 DE 102018119374
(43) Veröffentlichungstag der Anmeldung: 16.06.2021
(73) Patentinhaber: ZF CV Systems Europe BV, 1170 Brussels (BE)
(72) Erfinder: BRINKMANN, Stefan, 31515 Wunstorf (DE); HILLBRING, Dirk, 29225 Celle (DE); DIEKMEYER, Heinrich, 30890 Barsinghausen (DE)
(74) Vertreter: Rabe, Dirk-Heinrich
(86) Internationale Anmeldenummer: PCT/EP2019/067732
(87) Internationale Veröffentlichungsnummer: WO 2020/030350

(56) Entgegenhaltungen:
- DE-A1-102014 018 437
- DE-B3-102004 026 624
- DE-C2- 19 801 665

## Beschreibung

Die Erfindung betrifft ein Verfahren zur Funktionsüberwachung eines in einen Förderbetrieb schaltbaren Kompressors, der im Förderbetrieb Druckluft über eine Trocknerleitung einer Druckluftaufbereitungseinheit in mindestens eine Hauptversorgungsleitung fördert, von der mehrere Versorgungsleitungen von Druckluftverbraucherkreisen abzweigen, wobei an zumindest einigen der Versorgungsleitungen jeweils ein Drucksensor angeschlossen ist, wobei im Förderbetrieb des Kompressors ein Versorgungsdruck sensorisch erfasst wird, ein von diesem abgeleiteter Druckgradient mit einem vorgegebenen Grenzwert verglichen wird, und abhängig von dem Vergleichsergebnis ein Warnhinweis oder ein Warnsignal ausgegeben wird oder nicht.

Moderne elektronisch gesteuerte Druckluftversorgungsanlagen umfassen eine Druckluftaufbereitungseinheit mit Filter- und Trocknereinheiten, ein Mehrkreisschutzventil in Baueinheit mit Überströmventilen mehrerer Druckluftverbraucherkreise und eine elektronische Steuereinheit, der auch Drucksensoren zur Erfassung der Versorgungsdrücke zumindest einiger Druckluftverbraucherkreise zugeordnet sind. Durch einen Kompressor, der üblicherweise in Kolbenbauweise ausgeführt ist und durch das Einrücken einer Reibungskupplung an den Antriebsmotor des jeweiligen Kraftfahrzeugs ankoppelbar und somit in den Förderbetrieb schaltbar ist, wird im Förderbetrieb Luft aus der Umgebung angesaugt und verdichtet sowie anschließend über eine Trocknerleitung der Druckluftaufbereitungseinheit in mindestens eine Hauptversorgungsleitung gefördert. Von der Hauptversorgungsleitung zweigen über jeweils ein Überströmventil eines Mehrkreisschutzventils mehrere Versorgungsleitungen von Druckluftverbraucherkreisen ab, wobei an zumindest einigen von diesen Druckluftverbraucherkreisen jeweils ein Drucksensor zur Erfassung des dortigen Versorgungsdrucks angeschlossen ist.

Um einen Defekt an dem Kompressor oder in der Druckluftversorgungsanlage zu erkennen, sind Überwachungsverfahren bekannt, die im Prinzip darauf beruhen, im Förderbetrieb des Kompressors einen Förder- oder Versorgungsdruck oder den Druckgradienten eines Förder- oder Versorgungsdrucks sensorisch zu erfassen und mit einem vorgegebenen Grenzwert zu vergleichen, und abhängig von dem Vergleichsergebnis gegebenenfalls ein Warnsignal auszugeben.

Bei einem bekannten Überwachungsverfahren gemäß der DE 198 01 665 C2 ist vorgesehen, dass im Förderbetrieb des Kompressors der Ist-Druckverlauf des Förderdrucks sensorisch erfasst und unter Berücksichtigung des Anfangsdrucks mit einem Soll-Druckverlauf verglichen wird. Der Soll-Druckverlauf ist vorab bei einem Förderbetrieb eines Referenzkompressors ermittelt worden und in Form eines Polynoms zweiten Grades in einem Datenspeicher eines elektronischen Steuergerätes abgespeichert worden. Um den Soll-Druckverlauf ist eine obere und eine untere Toleranzgrenze definiert. Wenn der Ist-Druckverlauf des Förderdrucks die obere Toleranzgrenze überschreitet oder die untere Toleranzgrenze unterschreitet, wird ein Warnsignal ausgegeben. Aus der Richtung der Abweichung des Ist-Druckverlaufs von dem Soll-Druckverlauf kann auf unterschiedliche Ursachen der Fehlfunktion geschlossen werden.

Aus der DE 10 2004 026 624 B3 ist ein Verfahren zur Steuerung einer Druckluftaufbereitungseinheit bekannt, bei dem im Förderbetrieb des Kompressors der Druckgradient des Versorgungsdrucks in einer der Druckluftaufbereitungseinheit nachgeschalteten Hauptversorgungsleitung sensorisch erfasst und mit einem Referenzgradienten, der im Neuzustand des Kompressors und der Druckluftaufbereitungseinheit erfasst wurde, verglichen wird. Das Verfahren dient hauptsächlich zur Anpassung der Regenerationsluftmenge an die zuvor tatsächlich geförderte Luftmenge, die aus der Abweichung des aktuellen Druckgradienten von dem im Neuzustand ermittelten Druckgradienten abgeleitet bzw. entsprechend korrigiert wird. Die Erfassung des Druckgradienten im Neuzustand wie auch des aktuellen Druckgradienten erfolgt bevorzugt jeweils dann, wenn der Hauptversorgungsleitung durch die angeschlossenen Druckluftverbraucher keine Druckluft entnommen wird. Das Verfahren kann zusätzlich zur Funktionsüberwachung des Kompressors verwendet werden. So wird ein verschleißbedingtes Absinken des Wirkungsgrades des Kompressors erkannt und ein entsprechendes Warnsignal ausgegeben, wenn im Förderbetrieb der aktuelle Druckgradient des Versorgungsdrucks den Druckgradienten im Neuzustand um mehr als eine vorgegebene Grenzdifferenz unterschreitet.

In dem aus der DE 10 2014 018 437 A1 bekannten Überwachungsverfahren für eine Druckluftversorgungsanlage wird vor dem Förderbetrieb und während des Förderbetriebs des Kompressors jeweils eine Zustandsgröße der stromab des Kompressors geförderten Druckluft, beispielsweise der Versorgungsdruck in der Hauptversorgungsleitung, sensorisch erfasst. Die Erfassung der Zustandsgröße erfolgt so lange, bis diese einen vorgegebenen Grenzwert überschreitet. Anschließend wird die Zeitspanne zwischen der Erfassung der Zustandsgröße vor dem Förderbetrieb und der Erfassung des letzten Wertes der Zustandsgröße während des Förderbetriebs betrachtet. Überschreitet diese Zeitspanne einen vorgegebenen Zeitabstandsreferenzwert um mehr als ein vorgegebenes Toleranzintervall, wird ein Warnsignal ausgegeben.

Die bekannten Verfahren gehen von einer konstanten Antriebsdrehzahl des Kompressors im Förderbetrieb aus und berücksichtigen nicht, dass ein von dem Antriebsmotor eines Kraftfahrzeugs angetriebener Kompressor mit einer variablen Drehzahl betrieben wird. Mit zunehmender Antriebsdrehzahl steigt aber bekanntlich der Fördervolumenstrom eines Kompressors und damit der stromab in den Versorgungsleitungen erzeugte Druckgradient an, so dass ein bestimmter Versorgungsdruck entsprechend früher erreicht wird. Ebenfalls sind die bekannten Verfahren nicht dazu geeignet, bei einer auftretenden Abweichung der Förderleistung eines Kompressors zwischen verschiedenen Störungsursachen zu unterscheiden und im Hinblick auf die vorausschauende Planung von Wartungs- und Reparaturmaßnahmen Störungen präventiv zu erkennen.

Der vorliegenden Erfindung lag daher die Aufgabe zugrunde, ein Verfahren zur Funktionsüberwachung eines Kompressors einer Druckluftversorgungsanlage mit dem eingangs genannten Aufbau anzugeben, mit dem unter Berücksichtigung einer variablen Antriebsdrehzahl Störungsursachen im Umfeld des Kompressors frühzeitig sowie störungsspezifisch erkannt und zur rechtzeitigen Vorbereitung von Wartungs- und Reparaturmaßnahmen durch die Ausgabe entsprechender Warnhinweise oder Warnsignale angezeigt werden können.

Diese Aufgabe ist in Verbindung mit den eingangs und im Anspruch 1 genannten Merkmalen durch die folgenden Verfahrensschritte gelöst:
a) fortlaufendes sensorisches Erfassen des Versorgungsdrucks p_{V} in der Versorgungsleitung mindestens eines mit einem Drucksensor versehenen Druckluftverbraucherkreises,
b) fortlaufende Berechnung der Druckgradienten grd_p_{V} des Versorgungsdrucks p_{V} aus jeweils mindestens zwei aufeinanderfolgend erfassten Druckwerten p_{V_i}, p_{V_i+1} sowie der Zeitdifferenz Δt zwischen deren Erfassung zumindest während des Förderbetriebs T_{F1}, T_{F2}, T_{F3} des Kompressors,
c) Gewichtung der Druckgradienten grd_p_{V} durch eine Division mit der jeweils aktuellen Antriebsdrehzahl n_{K} des Kompressors (grd_p_{V_W} = grd_p_{V} / n_{K}) oder mit der jeweils aktuellen drehzahlabhängigen Soll-Fördermenge Qₛₒₗₗ des Kompressors (grd_p_{v_w} = grd_p_{V} / Qₛₒₗₗ),
d) Vergleich der gewichteten Druckgradienten grd_pv_w mit einem vorgegebenen Gradientengrenzwert grd_p_{G}_w,
e) Ausgabe eines Warnhinweises oder Warnsignals, wenn der gewichtete Druckgradient grd_p_{V_W} innerhalb eines vorgegebenen Überwachungszeitraumes T_{M} den Gradientengrenzwert grd__{PG_W} nicht überschritten hat.

Die Erfindung geht demnach aus von einem an sich bekannten Kompressor, der beispielsweise über das Einrücken einer von einem Antriebsmotor eines Kraftfahrzeugs antriebbaren Reibungskupplung oder durch das Einschalten eines zugeordneten Elektromotors in einen Förderbetrieb schaltbar ist, und der im Förderbetrieb Druckluft über eine Trocknerleitung einer Druckluftaufbereitungseinheit in mindestens eine Hauptversorgungsleitung fördert. Von der Hauptversorgungsleitung zweigen mehrere Versorgungsleitungen von Druckluftverbraucherkreisen ab, wobei an zumindest einigen der Versorgungsleitungen jeweils ein Drucksensor angeschlossen ist. Im Förderbetrieb des Kompressors wird ein Versorgungsdruck p_{V} sensorisch erfasst. Von diesem Versorgungsdruck p_{V} wird ein Druckgradient grd_p_{V} abgeleitet, welcher mit einem vorgegebenen Grenzwert verglichen wird. Abhängig von dem Vergleichsergebnis wird ein Warnhinweis oder ein Warnsignal ausgegeben oder nicht.

Durch die Gewichtung der berechneten Werte des Druckgradienten grd_p_{V} des Versorgungsdrucks p_{V} mit der jeweils aktuellen Antriebsdrehzahl n_{K} des Kompressors oder mit der jeweils aktuellen drehzahlabhängigen Soll-Fördermenge Qₛₒₗₗ des Kompressors wird der Einfluss der Antriebsdrehzahl n_{K} auf den Versorgungsdruck p_{V} weitgehend eliminiert. Der derart gewichtete Druckgradient grd_pv_w bildet dadurch bei Förderbetrieben des Kompressors, während denen es zu keiner größeren Druckluftentnahme in den Druckluftverbraucherkreisen kommt, in dessen grafisch aufgetragenen Kurvenverlauf ein Plateau aus, dessen Höhe beziehungsweise Wert gut mit dem Gradientengrenzwert grd_p_{G}_w vergleichbar ist. Der aktuelle Wert für die Soll-Fördermenge Qₛₒₗₗ des Kompressors kann zum Beispiel aus einem in einer elektronischen Steuereinheit ECU abgespeicherten Betriebskennfeld entnommen werden. Der Wert einer mittleren Soll-Fördermenge Q_{soll_m} lässt sich aus dem zeitlichen Verlauf der Soll-Fördermenge Qₛₒₗₗ bestimmen.

Die Antriebsdrehzahl n_{K} des Kompressors ist häufig identisch mit der Motordrehzahl n_{M} des Antriebsmotors (n_{K} = n_{M}), da der Kompressor über eine Reibungskupplung üblicherweise unmittelbar an die Kurbelwelle des Antriebsmotors angekoppelt wird. Wird der Kompressor dagegen über einen Nebenabtrieb des Antriebsmotors oder des Fahrgetriebes angetrieben, steht die Antriebsdrehzahl n_{K} des Kompressors in einem festen Verhältnis zu der Motordrehzahl n_{M} des Antriebsmotors (n_{K} = n_{M} / i_{PTO}). Alternativ dazu kann der Kompressor auch von einem Elektromotor angetrieben werden. In diesem Fall entspricht die Antriebsdrehzahl n_{K} des Kompressors der Drehzahl des Elektromotors und ist dann weitgehend konstant. Die Drehzahl des Elektromotors kann dabei durch die elektronische Steuereinheit ECU vorgegeben werden.

Das Überwachungsverfahren gemäß der Erfindung geht davon aus, dass innerhalb des Überwachungszeitraums T_{M} mehrere Förderbetriebe des Kompressors vorkommen, in denen in größerem Umfang Druckluft in den Druckluftverbraucherkreisen entnommen wird, und der Gradientengrenzwert grd_p_{G_W} deshalb von dem gewichteten Druckgradienten grd_p_{V_W} des Versorgungsdrucks p_{V} nicht überschritten wird. Ebenso geht das erfindungsgemäße Überwachungsverfahren davon aus, dass innerhalb des Überwachungszeitraums T_{M} mehrere Förderbetriebe des Kompressors vorkommen, in denen über einen längeren Zeitraum keine Druckluft in den Druckluftverbraucherkreisen entnommen wird, und der Gradientengrenzwert grd_p_{G}_w deshalb von dem gewichteten Druckgradienten grd_p_{V_W} des Versorgungsdrucks p_{V} überschritten wird, sofern keine Störung im Umfeld des Kompressors oder in der Druckluftversorgungsanlage vorliegt.

Der Warnhinweis beziehungsweise das Warnsignal kann durch das Aufleuchten einer Warnleuchte in dem Armaturenbrett oder in dem Instrumententräger des Kraftfahrzeugs, durch das Aufleuchten eines entsprechenden Warnsymbols in dem Instrumententräger, durch die Anzeige eines entsprechenden Warntextes in einem Display des Instrumententrägers und/oder durch das Abspeichern einer entsprechenden Fehlermeldung in einem der elektronischen Steuereinheit der Druckluftversorgungsanlage zugeordneten Fehlerspeicher erfolgen. Das erfindungsgemäße Überwachungsverfahren greift auf vorhandene Druck- und Drehzahlsensoren zurück und ist rein softwarebasiert. Somit ist für die Anwendung des Überwachungsverfahrens Kosten sparend kein zusätzlicher apparativer Aufwand erforderlich.

Die gestellte Aufgabe wird auch durch ein etwas abgewandeltes Verfahren gelöst, bei dem auf eine Gewichtung der berechneten Werte des Druckgradienten grd_p_{V} des Versorgungsdrucks p_{V} verzichtet wird.

Die Erfindung betrifft demnach auch ein Verfahren zur Funktionsüberwachung eines Kompressors, der in einen Förderbetrieb schaltbar ist, und der im Förderbetrieb Druckluft über eine Trocknerleitung einer Druckluftaufbereitungseinheit in mindestens eine Hauptversorgungsleitung fördert, von der mehrere Versorgungsleitungen von Druckluftverbraucherkreisen abzweigen, wobei an zumindest einigen der Versorgungsleitungen jeweils ein Drucksensor angeschlossen ist, wobei im Förderbetrieb des Kompressors ein Versorgungsdruck p_{V} sensorisch erfasst wird, ein von diesem abgeleiteter Druckgradient mit einem vorgegebenen Grenzwert verglichen wird, und abhängig von dem Vergleichsergebnis ein Warnhinweis oder ein Warnsignal ausgegeben wird oder nicht. Gemäß der Erfindung weist dieses alternative Verfahren die folgenden Verfahrensschritte auf:
a) Fortlaufendes sensorisches Erfassen des Versorgungsdrucks p_{V} in einer Hauptversorgungsleitung oder in der Versorgungsleitung mindestens eines mit einem Drucksensor versehenen Druckluftverbraucherkreises,
b) fortlaufende Berechnung der Druckgradienten grd_pᵥ des Versorgungsdrucks p_{V} aus jeweils mindestens zwei aufeinanderfolgend erfassten Druckwerten p_{V_i}, p_{V_i+1} sowie der Zeitdifferenz Δt zwischen deren Erfassung zumindest während des Förderbetriebs des Kompressors,
c) Vergleich der Druckgradienten grd_pᵥ mit einem jeweils aktuellen drehzahlabhängig vorgegebenen Gradientengrenzwert grd_p_{G}, welcher die Entnahme von Druckluft durch die Verbraucher nicht berücksichtigt,
e) Ausgabe eines Warnhinweises oder Warnsignals, wenn der Druckgradient grd_pᵥ innerhalb eines vorgegebenen Überwachungszeitraumes T_{M} den jeweiligen Gradientengrenzwert grd_p_{G} nicht überschritten hat.

Für die beiden geschilderten und zueinander alternativen Verfahren wird es als vorteilhaft erachtet, wenn vorgesehen ist, dass solche Druckschwankungswerte des Versorgungsdrucks p_{V} nicht berücksichtigt werden, welche auf thermodynamische Effekte beruhen, die in den Druckluftverbraucherkreisen nach Druckluftverbräuchen entstehen.

Um die Wirkung von Druckschwankungen und Messfehlern zu kompensieren und einen für das Verfahren vorteilhaften geglätteten Druckverlauf des Versorgungsdrucks p_{V} zu erzielen, ist bevorzugt vorgesehen, dass die sensorisch erfassten Werte des Versorgungsdrucks p_{V_i}, p_{V_i+1} und/oder die daraus berechneten Werte der Druckgradienten grd_p_{V}, grd_p_{V_W} tiefpassgefiltert werden.

Ebenso ist es vorteilhaft, wenn die sensorisch erfassten Druckwerte p_{V_i}, p_{V_i+1} und/oder die daraus berechneten Werte der Druckgradienten grd_pᵥ, grd_p_{V}__{W} für eine festgelegte Zeitspanne T_{A} tiefpassgefiltert werden. Nach einem größeren Abfall des Versorgungsdrucks p_{V}, der durch die Entnahme einer größeren Druckluftmenge in einem der Druckluftverbraucherkreise verursacht werden kann, fällt der anschließende Druckanstieg durch thermodynamische Effekte deutlich stärker aus als dies durch den Förderbetrieb des Kompressors alleine möglich ist. Durch das Tiefpassfiltern der berechneten Werte des ungewichteten Druckgradienten grd_pᵥ beziehungsweise des gewichteten Druckgradienten grd_p_{V_W} wird dieser störende Effekt eliminiert.

Alternativ zu der Tiefpassfilterung kann nach dem Auftreten eines größeren Abfalls des Versorgungsdrucks p_{V} zu dem gleichen Zweck die Berechnung der ungewichteten Druckgradienten grd_p_{V} beziehungsweise der gewichteten Druckgradienten grd_p_{V_W} für eine festgelegte Zeitspanne T_{A}' ausgesetzt werden.

Der Gradientengrenzwert grd_p_{W_G} ist bevorzugt als ein durch einen Anpassungsfaktor f_{A} < 1 bestimmter Bruchteil eines für den Kompressor, die Druckluftversorgungsanlage und die angeschlossenen Druckluftverbraucherkreise charakteristischen gewichteter Druckgradient grd_p_{C_W} definiert (grd_p_{W_G} = f_{A ×} grd_p_{C_W}). Der mit der Antriebsdrehzahl n_{K} des Kompressors gewichtete charakteristische Druckgradient grd_pc_w ist derjenige Druckgradient pro Umdrehung des Kompressors, der unter idealen Bedingungen, also ohne die drosselnde Wirkung von Leitungen, Filtern und Trocknern sowie ohne Druckluftverbrauch, erzielt werden könnte. Durch die Multiplikation mit dem Anpassungsfaktor f_{A} wird der charakteristische Druckgradient grd_pc_w auf eine realistische Größe des Gradientengrenzwertes grd_p_{W_G} reduziert, welcher zum einen die Anlagencharakteristik und zum anderen die erlaubte Funktionsminderung des Kompressors berücksichtigt.

Wenn in der Druckluftversorgungsanlage, beispielsweise durch ein kontinuierlich öffnendes Druckbegrenzungsventil, oder in einem der Druckluftverbraucherkreise ein Verbraucher mit einem permanenten Druckluftverbrauch vorhanden ist, wird der charakteristische Druckgradient grd_p_{C_W} vorzugsweise mit einem entsprechend kleineren Anpassungsfaktor f_{A} multipliziert. Zur Vermeidung eines permanenten Druckluftverbrauches in der Druckversorgungsanlage wird dort bevorzugt ein Druckbegrenzungsventil mit Hysterese verwendet.

Der charakteristische Druckgradient grd_pc_w kann zum Beispiel aus dem Hubvolumen des Kompressors V_{K}, dem volumetrischen Wirkungsgrad ηV des Kompressors und dem Speichervolumen V_{S} aller Druckluftverbraucherkreise bestimmt werden. Bei einem Hubvolumen des Kompressors von V_{K} = 636 cm³ und einem Speichervolumen der Druckluftverbraucherkreise von V_{S} = 80 l ergibt sich bei einer mittleren Antriebsdrehzahl des Kompressors von n_{K_m} = 1500 U/min ein ungewichteter charakteristischer Druckgradient von grd_p_{C} = 7,2 bar/min und ein gewichteter charakteristischer Druckgradient von grd_p_{C_W} = 0,0048 bar/U. Der letztgenannte Wert kann auch dadurch berechnet werden, dass das mit dem volumetrischen Wirkungsgrad ηV multiplizierte Hubvolumen V_{K} des Kompressors durch das Speichervolumen V_{S} aller Druckluftverbraucherkreise dividiert wird (grd_pc_w = ηV × V_{K} / V_{S}).

Der Überwachungszeitraum T_{M}, in dem die gewichteten Druckgradienten grd_p_{V_W} mehrerer Förderbetriebe des Kompressors mit dem jeweiligen Gradientengrenzwert grd_p_{G_W} verglichen werden, kann unterschiedlich definiert sein.

Der Überwachungszeitraum T_{M} kann als der Zeitraum seit der Erstinbetriebnahme des Kraftfahrzeugs oder beispielsweise seit einem größeren Wartungs- oder Reparaturereignis an dem Kompressor oder der Druckluftversorgungsanlage definiert sein.

Möglich ist es aber auch, dass der Überwachungszeitraum T_{M} als die kumulierte Betriebszeit des Kraftfahrzeugs, zum Beispiel seit der Erstinbetriebnahme des Kraftfahrzeugs oder beispielsweise seit einem größeren Wartungs- oder Reparaturereignis an dem Kompressor oder der Druckluftversorgungsanlage definiert ist.

Ebenso ist es möglich, dass der Überwachungszeitraum T_{M} als die kumulierte Fahrstrecke des Kraftfahrzeugs, zum Beispiel seit der Erstinbetriebnahme des Kraftfahrzeugs oder beispielsweise seit einem größeren Wartungs- oder Reparaturereignis an dem Kompressor oder der Druckluftversorgungsanlage definiert ist.

Um den Überwachungszeitraum T_{M} konkret auf den Förderbetrieb des Kompressors zu beziehen, ist es jedoch vorteilhaft, wenn der Überwachungszeitraum T_{M} als die kumulierte Förderbetriebsdauer des Kompressors zum Beispiel seit der Erstinbetriebnahme des Kraftfahrzeugs oder beispielsweise seit einem größeren Wartungs- oder Reparaturereignis an dem Kompressor oder der Druckluftversorgungsanlage definiert ist.

Das erfindungsgemäße Überwachungsverfahren ermöglicht es, mehrere Störungskonten für verschiedene Störungsursachen zu führen, wobei der Anpassungsfaktor f_{A} des charakteristischen Druckgradienten grd_p_{C_W} und/oder die Art sowie Länge des Überwachungszeitraums T_{M} für die Überwachung verschiedener Störungsursachen unterschiedlich festgelegt sein können.

So ist es zum Beispiel zur Erkennung einer schadensbedingt zurückgehenden Förderleistung des Kompressors vorteilhaft, einen relativ kurzen Überwachungszeitraum T_{M} von beispielsweise einer Betriebsstunde und einen relativ niedrigen Gradientengrenzwert grd_p_{G_W} mit einem Anpassungsfaktor von zum Beispiel f_{A} = 0,4 zu verwenden.

Will man dagegen eine Verkokung, also eine Ablagerung von Ölkohle, an den Druckventilen und in der Förderleitung des Kompressors erkennen, ist die Verwendung eines sehr langen Überwachungszeitraums sowie eines relativ hohen Gradientengrenzwertes grd_p_{G_W} mit einem Anpassungsfaktor von beispielsweise f_{A} = 0,9 vorteilhaft.

Zur Erkennung bestimmter Störungsursachen ist es vorteilhaft, die Berechnung des gewichteten Druckgradienten grd_p_{v W} des Versorgungsdrucks p_{V} nicht im gesamten Druck- und Drehzahlbereich von zum Beispiel p_{V} = 10 bis 12,5 bar und n_{K} = 700 bis 2500 U/min, sondern nur in einem begrenzten Bereich des Versorgungsdrucks p_{V} und/oder in einem begrenzten Bereich der Antriebsdrehzahl n_{K} des Kompressors durchzuführen.

So kann zum Beispiel der Beginn des Durchrutschens einer Reibungskupplung eines Kompressors dadurch erkannt werden, dass der gewichtete Druckgradient grd_p_{V_W} in einem oberen Bereich des Versorgungsdrucks p_{V} von beispielsweise p_{V} =12 bis 12,5 bar und/oder in einem oberen Bereich der Antriebsdrehzahl n_{K} des Kompressors von zum Beispiel n_{K} = 2000 bis 2500 U/min den Gradientengrenzwert grd_p_{G}_w innerhalb des vorgegebenen Überwachungszeitraums T_{M} nicht überschritten hat.

Zur weiteren Verdeutlichung der Erfindung ist der Beschreibung eine Zeichnung mit einem Ausführungsbeispiel beigefügt. In dieser zeigt
Fig. 1 ein Diagramm mit den Zeitverläufen verschiedener Kennwerte einer Druckluftversorgungsanlage, und
Fig. 2 den schematischen Aufbau einer typischen Druckluftversorgungsanlage eines Kraftfahrzeugs.

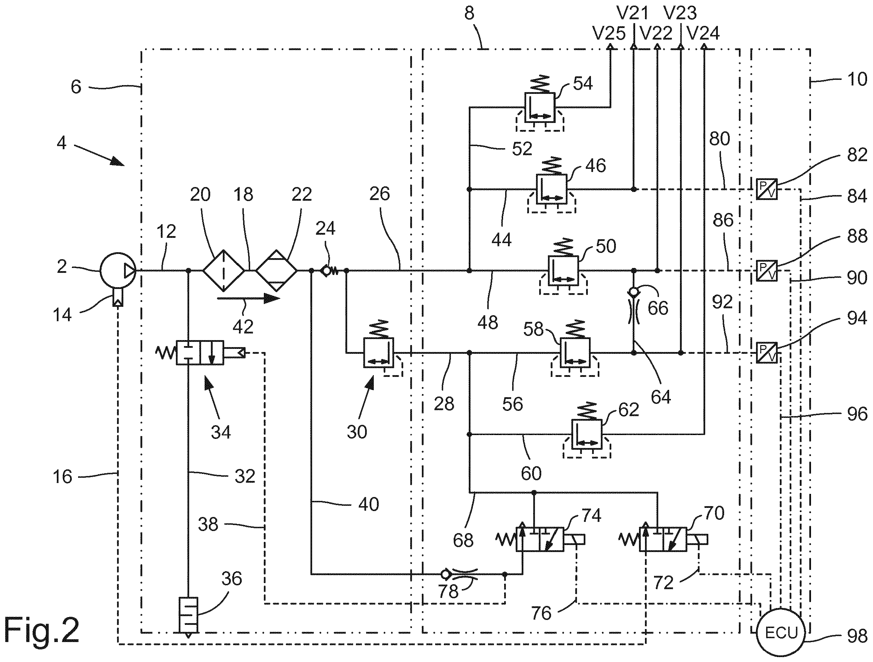

In Fig. 2 sind ein Kompressor 2 und eine elektronisch gesteuerte Druckluftversorgungsanlage 4 eines Kraftfahrzeugs in schematischer Form dargestellt, bei denen das erfindungsgemäße Verfahren zur Funktionsüberwachung des Kompressors 2 anwendbar ist. Die Druckluftversorgungsanlage 4 umfasst die Baugruppen einer Druckluftaufbereitungseinheit 6, einer Mehrkreisschutzventileinheit 8 und einer elektronischen Steuereinheit 10.

Der Kompressor 2 ist ausgangsseitig an eine Förderleitung 12 angeschlossen und weist einen Steuerdruckeingang 14 auf. Durch die Beaufschlagung des Steuerdruckeingangs 14 mit einem ausreichend hohen Steuerdruck aus einer angeschlossenen Steuerdruckleitung 16 wird eine nicht abgebildete Reibungskupplung eingerückt, wodurch der Kompressor 2 antriebstechnisch mit einem nicht abgebildeten Antriebsmotor des Kraftfahrzeugs verbunden und dadurch in den Förderbetrieb geschaltet wird. Im Förderbetrieb saugt der Kompressor 2 Luft aus der Umgebung an und fördert diese als verdichtete Druckluft in die Förderleitung 12.

Die Druckluftaufbereitungseinheit 6 weist eine Trocknerleitung 18 auf, in der in einer durch den Richtungspfeil 42 angegebenen Förderrichtung nacheinander eine Filtereinheit 20, eine Trocknereinheit 22 und ein Rückschlagventil 24 angeordnet sind. Die Trocknerleitung 18 ist eingangsseitig an die Förderleitung 12 angeschlossen und ausgangsseitig in zwei Hauptversorgungsleitungen 26, 28 verzweigt. Die zweite Hauptversorgungsleitung 28 ist über ein eingebautes Druckbegrenzungsventil 30 in ihrem Maximaldruck begrenzt. Das Druckbegrenzungsventil 30 weist vorzugsweise eine Hysterese auf. Vor der Filtereinheit 20 zweigt von der Trocknerleitung 18 eine Entlüftungsleitung 32 ab, in der ein Entlüftungsventil 34 angeordnet ist, und die über einen Schalldämpfer 36 in die Umgebung führt. Das Entlüftungsventil 34 ist als ein druckgesteuertes 2/2-Wege-Schaltventil ausgebildet, das im steuerdrucklosen Zustand geschlossen ist und durch die Beaufschlagung einer an dessen Steuerdruckeingang angeschlossenen Steuerdruckleitung 38 mit einem ausreichend hohen Steuerdruck geöffnet werden kann. Zwischen der Trocknereinheit 22 und dem Rückschlagventil 24 ist eine Regenerationsleitung 40 an die Trocknerleitung 18 angeschlossen, durch die bereits getrocknete Druckluft zu der Trocknereinheit 22 rückführbar ist.

Die Mehrkreisschutzventileinheit 8 umfasst fünf Überströmventile 46, 50, 54, 58, 62 eines nicht näher dargestellten Mehrkreisschutzventils, ein Regenerationssteuerventil 74, ein Kompressorsteuerventil 70 und zwei Drosselrückschlagventile 66, 78. In der Mehrkreisschutzventileinheit 8 verzweigt die erste Hauptversorgungsleitung 26 in die drei Versorgungsleitungen 44, 48, 52 von drei Druckluftverbraucherkreisen V21, V22, V25.

Bei den Druckluftverbraucherkreisen V21, V22, V25 handelt es sich beispielsweise um einen ersten Betriebsbremskreis V21 des Motorfahrzeugs, einen zweiten Betriebsbremskreis V22 des Motorfahrzeugs und einen Luftfederungskreis V25. Die druckbegrenzte zweite Hauptversorgungsleitung 28 verzweigt in der Mehrkreisschutzventileinheit 8 in die zwei Versorgungsleitungen 56, 60 von zwei weiteren Druckluftverbraucherkreisen V23, V24 und in eine Steuerdruckhauptleitung 68. Bei den weiteren Druckluftverbraucherkreisen V23, V24 handelt es sich beispielsweise um einen Anhänger- und Feststellbremskreis V23 sowie um einen Nebenverbraucherkreis V24. In den Versorgungsleitungen 44, 48, 52, 56, 60 der fünf Druckluftverbraucherkreise V21, V22, V23, V24, V25 ist jeweils eines der Überströmventile 46, 50, 54, 58, 62 des Mehrkreisschutzventils angeordnet.

Ausgangsseitig der betreffenden Überströmventile 58, 50 ist zwischen der Versorgungsleitung 56 des Anhänger- und Feststellbremskreises V23 und der Versorgungsleitung 48 des zweiten Betriebsbremskreises V22 eine Verbindungsleitung 64 mit dem in Richtung der Versorgungsleitung 48 des zweiten Betriebsbremskreises V22 öffnenden Drosselrückschlagventil 66 angeordnet. Über diese Verbindung kann bei entsprechendem Druckgefälle Druckluft aus dem Anhänger- und Feststellbremskreis V23 in den zweiten Betriebsbremskreis V22 strömen und den Feststellbremskreis V23 leeren.

An die Steuerdruckhauptleitung 68 sind das Kompressorsteuerventil 70 und das Regenerationssteuerventil 74 eingangsseitig angeschlossen. Beide Steuerventile 70, 74 sind jeweils als ein 3/2-Wege-Magnetschaltventil ausgebildet, deren eingangsseitige Anschlüsse im stromlosen Zustand abgesperrt sind, und die durch die Bestromung einer jeweils zugeordneten elektrischen Steuerleitung 72, 76 umschaltbar sind.

Durch eine Bestromung des Kompressorsteuerventils 70 wird die ausgangsseitig an dieses angeschlossene Steuerdruckleitung 16 des Kompressors 2 mit der Steuerdruckhauptleitung 68 verbunden, wodurch die Reibungskupplung des Kompressors 2 ausgerückt und der Kompressor 2 von dem Antriebsmotor abgekoppelt wird. Bei drucklosem Steuerdruckeingang 14 des Kompressors 2 ist die Reibungskupplung des Kompressors 2 eingerückt, so dass sich der Kompressor 2 dann bei laufendem Antriebsmotor im Förderbetrieb befindet. Im Förderbetrieb fördert der Kompressor 2 Druckluft entsprechend der durch den Richtungspfeil 42 angegebenen Förderrichtung durch die Förderleitung 12, die Filtereinheit 20, die Trocknerleitung 18, die Trocknereinheit 22 und das Rückschlagventil 24 in die beiden Hauptversorgungsleitungen 26, 28 sowie über die Überströmventile 46, 50, 54, 58, 62 des Mehrkreisschutzventils weiter in die Druckluftverbraucherkreise V21, V22, V23, V24, V25.

Durch eine Bestromung des Regenerationssteuerventils 74 wird die ausgangsseitig an dieses angeschlossene Regenerationsleitung 40, in der das in Richtung der Trocknerleitung 18 öffnende Drosselrückschlagventil 78 angeordnet ist, mit der Steuerdruckhauptleitung 68 verbunden. Hierdurch wird auch die Steuerdruckleitung 38 des Entlüftungsventils 34, die zwischen dem Regenerationssteuerventil 74 und dem Drosselrückschlagventil 78 an die Regenerationsleitung 40 angeschlossen ist, mit dem in der Steuerdruckhauptleitung 68 herrschenden Druck beaufschlagt, wodurch das Entlüftungsventil 34 geöffnet wird. Dadurch strömt dann bereits getrocknete Druckluft aus der zweiten Hauptversorgungsleitung 28 über die Steuerdruckhauptleitung 68 und die Regenerationsleitung 40 entgegen der Förderrichtung 42 durch die Trocknereinheit 22 und die Filtereinheit 20 über die Entlüftungsleitung 32 und den Schalldämpfer 36 in die Umgebung, wodurch die Trocknereinheit 22 regeneriert und die Filtereinheit 20 gereinigt wird.

An die Versorgungsleitungen 44, 48, 56 des ersten Betriebsbremskreises V21, des zweiten Betriebsbremskreises V22 und des Anhänger- und Feststellbremskreises V23 ist über jeweils eine Anschlussleitung 80, 86, 92 jeweils ein Drucksensor 82, 88, 94 angeschlossen. Diese Drucksensoren 82, 88, 94 stehen über jeweils eine elektrische Sensorleitung 84, 90, 96 mit einer elektronischen Steuereinheit 98 (ECU) in Verbindung. Ebenso stehen das Kompressorsteuerventil 70 und das Regenerationssteuerventil 74 über ihre elektrischen Steuerleitungen 72, 76 mit der elektronischen Steuereinheit 98 in Verbindung. Die Drucksensoren 82, 88, 94 und die elektronische Steuereinheit 98 sind in der Baugruppe der elektronischen Steuereinheit 10 zusammengefasst.

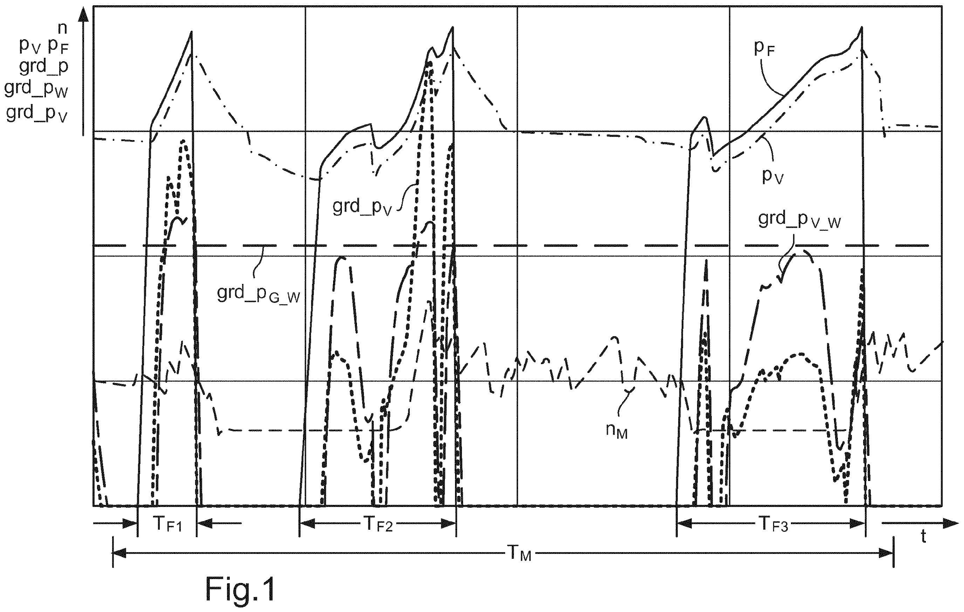

Nachfolgend wird das erfindungsgemäße Verfahren zur Funktionsüberwachung eines Kompressors 2 unter Bezugnahme auf die zuvor beschriebene Ausführung und Anordnung des Kompressors 2 und der Druckluftversorgungsanlage 4 anhand des Diagramms gemäß Fig. 1 näher erläutert. In dem Diagramm sind die Motordrehzahl n_{M} des Antriebsmotors, die bei eingerückter Reibungskupplung identisch mit der Antriebsdrehzahl n_{K} des Kompressors 2 ist, der am Ausgang des Kompressors 2 in der Förderleitung 12 wirksame Förderdruck p_{F} und der in einer der Versorgungsleitungen 44, 48 wirksame und mittels jeweils eines Drucksensors 82, 88 erfasste Versorgungsdruck p_{V} über der Zeit t dargestellt. Der Förderdruck p_{F} des Kompressors 2 wird an sich nicht sensorisch erfasst und ist vorliegend nur zum besseren Verständnis in dem Diagramm von Fig. 1 enthalten. Des Weiteren sind in dem Diagramm gemäß Fig. 1 die Zeitverläufe des Druckgradienten grd_pᵥ des Versorgungsdrucks p_{V}, des mit der Antriebsdrehzahl n_{K} des Kompressors 2 beziehungsweise mit der Motordrehzahl n_{M} des Antriebsmotors gewichteten Druckgradienten grd_p_{v W} und eines Gradientengrenzwertes grd_p_{G_W} dargestellt.

Das Überwachungsverfahren sieht vor, dass der Versorgungsdruck p_{V} in der Versorgungsleitung 44, 48 mindestens eines mit einem Drucksensor 82, 88 versehenen Druckluftverbraucherkreises V21, V22 in einem vorgegebenen Zeittakt Δt fortlaufend sensorisch erfasst wird. Zumindest während des Förderbetriebs (T_{F1}, T_{F2}, T_{F3}) des Kompressors 2 werden dann fortlaufend die Druckgradienten grd_pᵥ des Versorgungsdrucks p_{V} aus jeweils mindestens zwei aufeinanderfolgend erfassten Druckwerten p_{V_i}, p_{V_i+1} und der Zeitdifferenz Δt zwischen deren Erfassung berechnet. Anschließend werden die Druckgradienten grd_pᵥ zur Bestimmung des gewichteten Druckgradienten grd_p_{V_W} durch eine Division mit der jeweils aktuellen Antriebsdrehzahl n_{K} des Kompressors gewichtet (grd_p_{V_W} = grd_pᵥ / n_{K}) und tiefpassgefiltert.

Die derart gewichteten Druckgradienten grd_pv_w werden mit einem vorgegebenen, in Fig. 1 als Gerade dargestellten Gradientengrenzwert grd_p_{G_W} verglichen, welcher als ein durch einen Anpassungsfaktor f_{A} < 1 berücksichtigter Bruchteil eines für den Kompressor 2, die Druckluftversorgungsanlage 4 und die angeschlossenen Druckluftverbraucherkreise V21, V22, V23, V24, V25 charakteristischer gewichteter Druckgradient grd_p_{C_W} definiert ist (grd_p_{W_G} = f_{A} × grd_p_{C_W}).

Wenn der gewichtete Druckgradient grd_pv_w des Versorgungsdrucks p_{V} innerhalb eines vorgegebenen Überwachungszeitraums T_{M}, der beispielhaft als der in dem Diagramm gemäß Fig. 1 dargestellte Zeitraum angesehen werden kann, den Gradientengrenzwert grd_p_{G_W} nicht überschritten hat, wird ein Warnhinweis oder Warnsignal ausgegeben. Das Warnsignal oder der Warnhinweis kann durch das Aufleuchten einer Warnleuchte in dem Armaturenbrett oder in dem Instrumententräger des Kraftfahrzeugs, durch das Aufleuchten eines entsprechenden Warnsymbols in dem Instrumententräger, durch die Anzeige eines entsprechenden Warntextes in einem Display des Instrumententrägers und/oder durch das Abspeichern einer entsprechenden Fehlermeldung in einem der elektronischen Steuereinheit 10 der Druckluftversorgungsanlage 4 zugeordneten Fehlerspeicher erfolgen beziehungsweise gegeben sein.

Der in dem Diagramm gemäß Fig. 1 abgebildete Zeitraum T_{M} umfasst drei Förderbetriebe T_{F1}, T_{F2}, T_{F3} des Kompressors 2. Da der gewichtete Druckgradient grd_p_{V_W} des Versorgungsdrucks p_{V} den vorgegebenen Gradientengrenzwert grd_p_{G_W} während der ersten beiden Förderbetriebe T_{F1}, T_{F2} überschritten hat, wird in dem vorliegenden Fallbeispiel kein Warnsignal oder Warnhinweis ausgegeben. Lediglich in dem Falle, dass in allen drei Förderbetrieben T_{F1}, T_{F2}, T_{F3} des Kompressors 2 der gewichtete Druckgradient grd_p_{v W} des Versorgungsdrucks p_{V} den vorgegebenen Gradientengrenzwert grd_p_{G_W} nicht überschreitet, würde die elektronische Steuereinheit 98 ein Warnsignal oder einen Warnhinweis ausgegeben.

Im Rahmen des erfindungsgemäßen Überwachungsverfahrens können mehrere Störungskonten für verschiedene Störungsursachen geführt werden, für die der Anpassungsfaktor f_{A} des charakteristischen Druckgradienten grd_pc_w und/oder die Art und Länge des Überwachungszeitraums T_{M} unterschiedlich festgelegt sein können. Ebenso kann zur Erkennung bestimmter Störungsursachen die Berechnung des gewichteten Druckgradienten grd_p_{v W} nur in einem begrenzten Bereich des Versorgungsdrucks p_{V} und/oder in einem begrenzten Bereich der Antriebsdrehzahl n_{K} des Kompressors 2 durchgeführt werden.

### Bezugszeichenliste (Teil der Beschreibung)

- 2: Kompressor
- 4: Druckluftversorgungsanlage
- 6: Druckluftaufbereitungseinheit (Baugruppe)
- 8: Mehrkreisschutzventil, Mehrkreisschutzventileinheit (Baugruppe)
- 10: Elektronische Steuereinheit samt Sensoren (Baugruppe)
- 12: Förderleitung
- 14: Steuerdruckeingang
- 16: Steuerdruckleitung
- 18: Trocknerleitung
- 20: Filtereinheit
- 22: Trocknereinheit
- 24: Rückschlagventil
- 26: Erste Hauptversorgungsleitung
- 28: Zweite Hauptversorgungsleitung
- 30: Druckbegrenzungsventil
- 32: Entlüftungsleitung
- 34: Entlüftungsventil
- 36: Schalldämpfer
- 38: Steuerdruckleitung
- 40: Regenerationsleitung
- 42: Richtungspfeil, Förderrichtung
- 44: Versorgungsleitung
- 46: Überströmventil
- 48: Versorgungsleitung
- 50: Überströmventil
- 52: Versorgungsleitung
- 54: Überströmventil
- 56: Versorgungsleitung
- 58: Überströmventil
- 60: Versorgungsleitung
- 62: Überströmventil
- 64: Verbindungsleitung
- 66: Drosselrückschlagventil
- 68: Steuerdruckhauptleitung
- 70: Kompressorsteuerventil
- 72: Elektrische Steuerleitung
- 74: Regenerationssteuerventil
- 76: Elektrische Steuerleitung
- 78: Drosselrückschlagventil
- 80: Anschlussleitung
- 82: Drucksensor
- 84: Elektrische Sensorleitung
- 86: Anschlussleitung
- 88: Drucksensor
- 90: Elektrische Sensorleitung
- 92: Anschlussleitung
- 94: Drucksensor
- 96: Elektrische Sensorleitung
- 98: Elektronische Steuereinheit (ECU)
- ECU: Elektronische Steuereinheit
- f_{A}: Anpassungsfaktor
- grd_p: Druckgradient
- grd_p_{C}: Charakteristischer Druckgradient (ungewichtet)
- grd_p_{C_W}: Charakteristischer Druckgradient (gewichtet)
- grd_p_{G}: Gradientengrenzwert (ungewichtet)
- grd_p_{G_W}: Gradientengrenzwert (gewichtet)
- grd_pᵥ: Druckgradient des Versorgungsdrucks
- grd_p_{V_W}: Gewichteter Druckgradient des Versorgungsdrucks
- grd_p_{W}: Gewichteter Druckgradient
- i_{PTO}: Übersetzung eines Nebenabtriebs
- n: Drehzahl
- n_{K}: Antriebsdrehzahl des Kompressors
- n_{K_m}: Mittlere Antriebsdrehzahl des Kompressors
- n_{M}: Motordrehzahl
- p: Druck
- p_{F}: Förderdruck des Kompressors
- p_{V}: Versorgungsdruck
- p_{V_i}: i-ter Messwert des Versorgungsdrucks
- p_{V_i+1}: (i+1)-ter Messwert des Versorgungsdrucks
- Qₛₒₗₗ: Drehzahlabhängige Soll-Fördermenge
- Q_{soll_m}: Mittleren Soll-Fördermenge
- t: Zeit
- T_{A}: Zeitspanne
- T_{A}': Zeitspanne
- T_{M}: Überwachungszeitraum
- T_{F1}: Erste Förderbetriebsdauer
- T_{F2}: Zweite Förderbetriebsdauer
- T_{F3}: Dritte Förderbetriebsdauer
- V_{K}: Hubvolumen des Kompressors
- V_{S}: Speichervolumen
- V21: Druckluftverbraucherkreis, erster Betriebsbremskreis
- V22: Druckluftverbraucherkreis, zweiter Betriebsbremskreis
- V23: Druckluftverbraucherkreis, Anhänger- und Feststellbremskreis
- V24: Druckluftverbraucherkreis, Nebenverbraucherkreis
- V25: Druckluftverbraucherkreis, Luftfederungskreis
- Δt: Zeittakt, Zeitdifferenz
- ηV: Volumetrischer Wirkungsgrad

## Patentansprüche

1. Verfahren zur Funktionsüberwachung eines Kompressors (2),
der in einen Förderbetrieb (T_{F1}, T_{F2}, T_{F3}) schaltbar ist,
und der im Förderbetrieb Druckluft über eine Trocknerleitung (18) einer Druckluftaufbereitungseinheit (6) in mindestens eine Hauptversorgungsleitung (26, 28) fördert,
von der mehrere Versorgungsleitungen (44, 48, 52, 56, 60) von Druckluftverbraucherkreisen (V21, V22, V23, V24, V25) abzweigen,
wobei an zumindest einigen der Versorgungsleitungen (44, 48, 52, 56, 60) jeweils ein Drucksensor (82, 88, 94) angeschlossen ist,
wobei im Förderbetrieb des Kompressors (2) ein Versorgungsdruck p_{V} sensorisch erfasst wird,
ein von diesem abgeleiteter Druckgradient mit einem vorgegebenen Grenzwert verglichen wird,
und abhängig von dem Vergleichsergebnis ein Warnhinweis oder ein Warnsignal ausgegeben wird oder nicht,
mit folgenden Verfahrensschritten:
a) fortlaufendes sensorisches Erfassen des Versorgungsdrucks p_{V} in einer Hauptversorgungsleitung (26) oder in der Versorgungsleitung (44, 48) mindestens eines mit einem Drucksensor (82, 88) versehenen Druckluftverbraucherkreises (V21, V22),
b) fortlaufende Berechnung der Druckgradienten grd_p_{V} des Versorgungsdrucks p_{V} aus jeweils mindestens zwei aufeinanderfolgend erfassten Druckwerten p_{V_i}, p_{V_i+1} sowie der Zeitdifferenz Δt zwischen deren Erfassung zumindest während des Förderbetriebs (T_{F1}, T_{F2}, T_{F3}) des Kompressors (2),
c) Gewichtung der Druckgradienten grd_p_{V} durch eine Division mit der jeweils aktuellen Antriebsdrehzahl n_{K} des Kompressors (grd_p_{V_W} = grd_p_{V} / n_{K}) oder mit der jeweils aktuellen drehzahlabhängigen Soll-Fördermenge Qₛₒₗₗ des Kompressors (grd_p_{V_W} = grd_p_{V} / Qₛₒₗₗ),
d) Vergleich der gewichteten Druckgradienten grd_pv_w mit einem vorgegebenen Gradientengrenzwert grd_p_{G_W},
e) Ausgabe eines Warnhinweises oder Warnsignals, wenn der gewichtete Druckgradient grd_pv_w innerhalb eines vorgegebenen Überwachungszeitraumes T_{M} den Gradientengrenzwert grd_p_{G}_w nicht überschritten hat.

2. Verfahren zur Funktionsüberwachung eines Kompressors (2),
der in einen Förderbetrieb (T_{F1}, T_{F2}, T_{F3}) schaltbar ist,
und der im Förderbetrieb Druckluft über eine Trocknerleitung (18) einer Druckluftaufbereitungseinheit (6) in mindestens eine Hauptversorgungsleitung (26, 28) fördert,
von der mehrere Versorgungsleitungen (44, 48, 52, 56, 60) von Druckluftverbraucherkreisen (V21, V22, V23, V24, V25) abzweigen,
wobei an zumindest einigen der Versorgungsleitungen (44, 48, 52, 56, 60) jeweils ein Drucksensor (82, 88, 94) angeschlossen ist,
wobei im Förderbetrieb des Kompressors (2) ein Versorgungsdruck p_{V} sensorisch erfasst wird,
ein von diesem abgeleiteter Druckgradient mit einem vorgegebenen Grenzwert verglichen wird,
und abhängig von dem Vergleichsergebnis ein Warnhinweis oder ein Warnsignal ausgegeben wird oder nicht,
mit folgenden Verfahrensschritten:
a) fortlaufendes sensorisches Erfassen des Versorgungsdrucks p_{V} in einer Hauptversorgungsleitung (26) oder in der Versorgungsleitung (44, 48) mindestens eines mit einem Drucksensor (82, 88) versehenen Druckluftverbraucherkreises (V21, V22),
b) fortlaufende Berechnung der Druckgradienten grd_p_{V} des Versorgungsdrucks p_{V} aus jeweils mindestens zwei aufeinanderfolgend erfassten Druckwerten p_{V_i}, p_{V_i+1} sowie der Zeitdifferenz Δt zwischen deren Erfassung zumindest während des Förderbetriebs (T_{F1}, T_{F2}, T_{F3}) des Kompressors (2),
c) Vergleich der Druckgradienten grd_p_{V} mit einem jeweils aktuellen drehzahlabhängig vorgegebenen Gradientengrenzwert grd_p_{G}, welcher die Entnahme von Druckluft durch die Verbraucher nicht berücksichtigt,
d) Ausgabe eines Warnhinweises oder Warnsignals, wenn der Druckgradient grd_p_{V} innerhalb eines vorgegebenen Überwachungszeitraumes T_{M} den jeweiligen Gradientengrenzwert grd_p_{G} nicht überschritten hat.

3. Verfahren nach Anspruch 1 oder Anspruch 2, **dadurch gekennzeichnet, dass** solche Druckschwankungswerte des Versorgungsdrucks p_{V} nicht berücksichtigt werden, welche auf thermodynamische Effekte beruhen, die in den Druckluftverbraucherkreisen nach Druckluftverbräuchen stattfinden.

4. Verfahren nach einem der Ansprüche 1 bis 3, **dadurch gekennzeichnet, dass** die sensorisch erfassten Druckwerte p_{V_i}, p_{V_i+1} und/oder die daraus berechneten Werte der Druckgradienten grd_pᵥ, grd_pv_w tiefpassgefiltert werden.

5. Verfahren nach Anspruch 4, **dadurch gekennzeichnet, dass** die sensorisch erfassten Druckwerte p_{V_i}, p_{V_i+1} und/oder die daraus berechneten Werte der Druckgradienten grd_pᵥ, grd_pv_w für eine festgelegte Zeitspanne T_{A} tiefpassgefiltert werden.

6. Verfahren nach Anspruch 4 oder 5, **dadurch gekennzeichnet, dass** die sensorisch erfassten Druckwerte p_{V_i}, p_{V_i+1} und/oder die daraus berechneten Werte der Druckgradienten grd_p_{V}, grd_pv_w nach dem Auftreten eines größeren Abfalls des Versorgungsdrucks p_{V} für eine festgelegte Zeitspanne T_{A} tiefpassgefiltert werden.

7. Verfahren nach einem der Ansprüche 1 bis 6, **dadurch gekennzeichnet, dass** die Berechnung der Druckgradienten grd_pᵥ, grd_pv_w nach dem Auftreten eines größeren Abfalls des Versorgungsdrucks p_{V} für eine festgelegte Zeitspanne T_{A}' ausgesetzt wird.

8. Verfahren nach einem der Ansprüche 1 bis 7, **dadurch gekennzeichnet, dass** der Gradientengrenzwert grd_p_{W_G} als ein durch einen Anpassungsfaktor f_{A} < 1 bestimmter Bruchteil eines für den Kompressor (2), die Druckluftversorgungsanlage (4) und die angeschlossenen Druckluftverbraucherkreise (V21, V22, V23, V24, V25) charakteristischer gewichteter Druckgradienten grd_pc_w definiert ist (grd_p_{W_G} = f_{A} × grd_pc_w).

9. Verfahren nach Anspruch 8, **dadurch gekennzeichnet, dass** der charakteristische Druckgradient grd_pc_w mit einem entsprechend kleineren Anpassungsfaktor f_{A} multipliziert wird, wenn in der Druckluftversorgungsanlage (4) oder in einem der Druckluftverbraucherkreise (V21, V22, V23, V24, V25) ein permanenter Druckluftverbrauch vorhanden ist.

10. Verfahren nach Anspruch 8 oder 9, **dadurch gekennzeichnet, dass** der charakteristische Druckgradient grd_pc_w aus dem Hubvolumen V_{K} des Kompressors (2), dem volumetrischen Wirkungsgrad ηV des Kompressors (2) und dem Speichervolumen V_{S} aller Druckluftverbraucherkreise (V21, V22, V23, V24, V25) bestimmt wird.

11. Verfahren nach einem der Ansprüche 1 bis 10, **dadurch gekennzeichnet, dass** der Überwachungszeitraum T_{M} als die kumulierte Betriebszeit des Kraftfahrzeugs definiert ist.

12. Verfahren nach einem der Ansprüche 1 bis 10, **dadurch gekennzeichnet, dass** der Überwachungszeitraum T_{M} als die kumulierte Fahrstrecke des Kraftfahrzeugs definiert ist.

13. Verfahren nach einem der Ansprüche 1 bis 10, **dadurch gekennzeichnet, dass** der Überwachungszeitraum T_{M} als die kumulierte Förderbetriebsdauer des Kompressors definiert ist.

14. Verfahren nach einem der Ansprüche 1 bis 13, **dadurch gekennzeichnet, dass** mehrere Störungskonten für verschiedene Störungsursachen geführt werden, und dass der Anpassungsfaktor f_{A} des charakteristischen Druckgradienten grd_pc_w und/oder die Art und Länge des Überwachungszeitraums T_{M} für die Überwachung verschiedener Störungsursachen unterschiedlich festgelegt sind.

15. Verfahren nach einem der Ansprüche 1 bis 14, **dadurch gekennzeichnet, dass** die Berechnung des gewichteten Druckgradienten grd_pv_w des Versorgungsdrucks p_{V} zur Erkennung bestimmter Störungsursachen nur in einem begrenzten Bereich des Versorgungsdrucks p_{V} durchgeführt wird.

16. Verfahren nach einem der Ansprüche 1 bis 14, **dadurch gekennzeichnet, dass** die Berechnung des gewichteten Druckgradienten grd_pv_w des Versorgungsdrucks p_{V} zur Erkennung bestimmter Störungsursachen nur in einem begrenzten Bereich der Antriebsdrehzahl n_{K} des Kompressors (2) durchgeführt wird.

17. Verfahren nach Anspruch 15, **dadurch gekennzeichnet, dass** eine durchrutschende Reibungskupplung des Kompressors (2) dadurch erkannt wird, dass der gewichtete Druckgradient grd_pv_w in einem oberen Bereich des Versorgungsdrucks p_{V} den Gradientengrenzwert grd_p_{G}_w innerhalb des vorgegebenen Überwachungszeitraums T_{M} nicht überschritten hat.

18. Verfahren nach Anspruch 16, **dadurch gekennzeichnet, dass** eine durchrutschende Reibungskupplung des Kompressors (2) dadurch erkannt wird, dass der gewichtete Druckgradient grd_pv_w in einem oberen Bereich der Antriebsdrehzahl n_{K} des Kompressors (2) den Gradientengrenzwert grd_p_{G}_w innerhalb des vorgegebenen Überwachungszeitraums T_{M} nicht überschritten hat.

19. Verfahren nach einem der Ansprüche 1 bis 18, **dadurch gekennzeichnet, dass** zur Vermeidung eines permanenten Druckluftverbrauches in der Druckversorgungsanlage dort ein Druckbegrenzungsventil (30) mit Hysterese verwendet wird.

## Claims

1. A method for monitoring the functioning of a compressor (2),
which is switchable into a delivery mode (T_{F1,} T_{F2}, T_{F3}),
and which, in the delivery mode, delivers compressed air via a dryer line (18) of a compressed-air preparation unit (6) into at least one main supply line (26, 28),
from which multiple supply lines (44, 48, 52, 56, 60) of compressed-air consumer circuits (V21, V22, V23, V24, V25) branch off,
wherein a pressure sensor (82, 88, 94) is connected at each of at least some of the supply lines (44, 48, 52, 56, 60),
wherein, in the delivery mode of the compressor (2), a supply pressure pᵥ is detected with the aid of sensors,
a pressure gradient derived therefrom is compared to a predefined limiting value,
and, depending on the result of the comparison, a warning message or a warning signal is output or not,
including the following method steps:
a) continuously detecting, with the aid of sensors, the supply pressure pᵥ in a main supply line (26) or in the supply line (44, 48) of at least one compressed-air consumer circuit (V21, V22) provided with a pressure sensor (82, 88),
b) continuously calculating the pressure gradients grd_pᵥ of the supply pressure p_{V} from at least two consecutively detected pressure values p_{v_i}, p_{v_i+1} in each case and the time difference Δt between their detection at least during the delivery mode (T_{F1,} T_{F2}, T_{F3}) of the compressor (2),
c) weighting the pressure gradients grd_pᵥ by division by the particular current drive rotational speed n_{K} of the compressor (grd_{_}p_{v_W} =grd_{_}pᵥ / n_{K}) or by the particular current rotational speed-dependent setpoint delivery rate Qₛₒₗₗ of the compressor (grd_p_{V_W} =grd_{_}p_{V} /Qₛₒₗₗ),
d) comparing the weighted pressure gradients grd_p_{V_W} with a predefined gradient limiting value grd_p_{G_W},
e) outputting a warning message or warning signal if the weighted pressure gradient grd_p_{V_W} has not exceeded the gradient limiting value grd_p_{G_W} within a predefined monitoring time period T_{M}.

2. The method for monitoring the functioning of a compressor (2),
which is switchable into a delivery mode (T_{F1,} T_{F2}, T_{F3}),
and which, in the delivery mode, delivers compressed air via a dryer line (18) of a compressed-air preparation unit (6) into at least one main supply line (26, 28),
from which multiple supply lines (44, 48, 52, 56, 60) of compressed-air consumer circuits (V21, V22, V23, V24, V25) branch off,
wherein a pressure sensor (82, 88, 94) is connected at each of at least some of the supply lines (44, 48, 52, 56, 60),
wherein, in the delivery mode of the compressor (2), a supply pressure p_{V} is detected with the aid of sensors,
a pressure gradient derived therefrom is compared to a predefined limiting value,
and, depending on the result of the comparison, a warning message or a warning signal is output or not,
including the following method steps:
a) continuously detecting, with the aid of sensors, the supply pressure p_{V} in a main supply line (26) or in the supply line (44, 48) of at least one compressed-air consumer circuit (V21, V22) provided with a pressure sensor (82, 88),
b) continuously calculating the pressure gradients grd_pᵥ of the supply pressure p_{V} from at least two consecutively detected pressure values p_{V_i}, p_{V_i+1} in each case and the time difference Δt between their detection at least during the delivery mode (T_{F1,} T_{F2}, T_{F3}) of the compressor (2),
c) comparing the pressure gradients grd_pᵥ with a particular current, rotational speed-dependent, predefined gradient limiting value grd_p_{G}, which does not take the withdrawal of compressed air by the consumers into account,
d) outputting a warning message or warning signal if the pressure gradient grd_pᵥ has not exceeded the particular gradient limiting value grd_p_{G} within a predefined monitoring time period T_{M}.

3. The method according to claim 1 or claim 2, **characterized in that** pressure fluctuation values of the supply pressure p_{V} that are based on thermodynamic effects that arise in the compressed-air consumer circuits after consumption of compressed air are not taken into account.

4. The method according to any of claims 1 to 3, **characterized in that** the pressure values p_{V_i}, p_{V_i+1} detected with the aid of sensors, and/or the values of the pressure gradients grd_pᵥ, grd_p_{V_W} calculated on the basis thereof are low-pass filtered.

5. The method according to claim 4, **characterized in that** the pressure values p_{V_i}, p_{V_i+1} detected with the aid of sensors, and/or the values of the pressure gradients grd_pᵥ, grd_p_{V_W} calculated on the basis thereof are low-pass filtered for an established period of time T_{A}.

6. The method according to claim 4 or 5, **characterized in that** the pressure values p_{V_i}, P_{V_i+1} detected with the aid of sensors, and/or the values of the pressure gradients grd_pᵥ, grd_p_{V_W} calculated on the basis thereof are low-pass filtered for an established period of time T_{A} after the occurrence of a greater drop of the supply pressure p_{V}.

7. The method according to any of claims 1 to 6, **characterized in that** the calculation of the pressure gradients grd_pᵥ, grd_p_{V_W} is suspended for an established period of time T_{A}' after the occurrence of a greater drop of the supply pressure p_{V}.

8. The method according to any of claims 1 to 7, **characterized in that** the gradient limiting value grd_p_{W_G} is defined as a fraction, determined by an adaptation factor f_{A} <1, of a weighted pressure gradient grd_p_{C_W} that is characteristic for the compressor (2), the compressed-air supply system (4), and the connected compressed-air consumer circuits (V21, V22, V23, V24, V25) (grd_p_{W_G} =f_{A} ×grd_p_{C_W}).

9. The method according to claim 8, **characterized in that** the characteristic pressure gradient grd_p_{C_W} is multiplied by an appropriately smaller adaptation factor f_{A} when a permanent consumption of compressed air is present in the compressed-air supply system (4) or in one of the compressed-air consumer circuits (V21, V22, V23, V24, V25).

10. The method according to claim 8 or 9, **characterized in that** the characteristic pressure gradient grd_p_{C_W} is determined from the displacement V_{K} of the compressor (2), the volumetric efficiency ηV of the compressor (2), and the storage volume V_{S} of all compressed-air consumer circuits (V21, V22, V23, V24, V25) .

11. The method according to any of claims 1 to 10, **characterized in that** the monitoring time period T_{M} is defined as the cumulative operating time of the motor vehicle.

12. The method according to any of claims 1 to 10, **characterized in that** the monitoring time period T_{M} is defined as the cumulative distance traveled by the motor vehicle.

13. The method according to any of claims 1 to 10, **characterized in that** the monitoring time period T_{M} is defined as the cumulative delivery mode duration of the compressor.

14. The method according to any of claims 1 to 13, **characterized in that** multiple fault accounts are maintained for various causes of a fault, and that the adaptation factor f_{A} of the characteristic pressure gradient grd_p_{C_W} and/or the type and length of the monitoring time period T_{M} are established in different ways for monitoring various fault sources.

15. The method according to any of claims 1 to 14, **characterized in that** the calculation of the weighted pressure gradient grd_p_{V_W} of the supply pressure p_{V} is performed only in a limited range of the supply pressure p_{V} in order to detect certain causes of a fault.

16. The method according to any of claims 1 to 14, **characterized in that** the calculation of the weighted pressure gradient grd_p_{V_W} of the supply pressure p_{V} is performed only in a limited range of the drive rotational speed n_{K} of the compressor (2) in order to detect certain causes of a fault.

17. The method according to claim 15, **characterized in that** a slipping friction clutch of the compressor (2) is detected **in that** the weighted pressure gradient grd_p_{V_W} in an upper range of the supply pressure p_{V} has not exceeded the gradient limiting value grd_p_{G_W} within the predefined monitoring time period T_{M}.

18. The method according to claim 16, **characterized in that** a slipping friction clutch of the compressor (2) is detected **in that** the weighted pressure gradient grd_p_{V_W} in an upper range of the drive rotational speed n_{K} of the compressor (2) has not exceeded the gradient limiting value grd_p_{G_W} within the predefined monitoring time period T_{M}.

19. The method according to any of claims 1 to 18, **characterized in that** in order to avoid a permanent consumption of compressed air in the pressure supply system, a pressure limiting valve (30) with hysteresis is used.

## Revendications

1. Procédé de surveillance de fonctionnement d'un compresseur (2),
qui peut être commuté dans un mode de transport (T_{F1}, T_{F2}, T_{F3}),
et qui dans le mode de transport transporte de l'air comprimé en passant par une conduite de séchoir (18) d'une unité de préparation d'air comprimé (6) dans au moins une conduite d'alimentation principale (26, 28),
de laquelle bifurquent plusieurs conduites d'alimentation (44, 48, 52, 56, 60) de circuits consommateurs d'air comprimé (V21, V22, V23, V24, V25),
dans lequel respectivement un capteur de pression (82, 88, 94) est raccordé à au moins certaines des conduites d'alimentation (44, 48, 52, 56, 60),
dans lequel dans le mode de transport du compresseur (2) une pression d'alimentation pᵥ est détectée par capteur,
un gradient de pression dérivé de celle-ci est comparé à une valeur limite prédéfinie,
et en fonction du résultat de la comparaison un avertissement ou un signal d'avertissement est émis ou non,
avec les étapes de procédé suivantes :
a) la détection par capteur en continu de la pression d'alimentation p_{V} dans une conduite d'alimentation principale (26) ou dans la conduite d'alimentation (44, 48) d'au moins un circuit consommateur d'air comprimé (V21, V22) pourvu d'un capteur de pression (82, 88),
b) le calcul en continu des gradients de pression grd_pᵥ de la pression d'alimentation p_{V} à partir de respectivement au moins deux valeurs de pression p_{v_i}, p_{v_i+1} détectées successivement ainsi que de la différence de temps Δt entre la détection de celles-ci au moins pendant le mode de transport (T_{F1}, T_{F2}, T_{F3}) du compresseur (2),
c) la pondération des gradients de pression grd_pᵥ par une division par la vitesse de rotation d'entraînement n_{K} respectivement actuelle du compresseur (grd_p_{v_w} = grd_pᵥ / n_{K}) ou par le débit de transport théorique Qₛₒₗₗ dépendant de la vitesse de rotation respectivement actuel du compresseur (grd_p_{V_W} = grd_p_{V} / Qₛₒₗₗ),
d) la comparaison des gradients de pression grd_p_{V_W} pondérés à une valeur limite de gradient de pression grd_p_{G_W} prédéfinie,
e) l'émission d'un avertissement ou signal d'avertissement, lorsque le gradient de pression grd_p_{V_W} pondéré pendant un laps de temps de surveillance T_{M} prédéfini n'a pas dépassé la valeur limite de gradient grd_p_{G_W.}

2. Procédé de surveillance de fonctionnement d'un compresseur (2),
qui peut être commuté dans un mode de transport (T_{F1}, T_{F2}, T_{F3}),
et qui dans le mode de transport transporte de l'air comprimé en passant par une conduite de séchoir (18) d'une unité de préparation d'air comprimé (6) dans au moins une conduite d'alimentation principale (26, 28),
de laquelle bifurquent plusieurs conduites d'alimentation (44, 48, 52, 56, 60) de circuits consommateurs d'air comprimé (V21, V22, V23, V24, V25),
dans lequel respectivement un capteur de pression (82, 88, 94) est raccordé à au moins certaines des conduites d'alimentation (44, 48, 52, 56, 60),
dans lequel dans le mode de transport du compresseur (2) une pression d'alimentation pᵥ est détectée par capteur,
un gradient de pression dérivé de celle-ci est comparé à une valeur limite prédéfinie,
et en fonction du résultat de la comparaison un avertissement ou un signal d'avertissement est émis ou non,
avec les étapes de procédé suivantes :
a) la détection par capteur en continu de la pression d'alimentation pᵥ dans une conduite d'alimentation principale (26) ou dans la conduite d'alimentation (44, 48) d'au moins un circuit consommateur d'air comprimé (V21, V22) pourvu d'un capteur de pression (82, 88),
b) le calcul en continu des gradients de pression grd_pᵥ de la pression d'alimentation p_{V} à partir de respectivement au moins deux valeurs de pression p_{V_i}, p_{V_i+1} détectées successivement ainsi que de la différence de temps Δt entre la détection de celles-ci au moins pendant le mode de transport (T_{F1}, T_{F2}, T_{F3}) du compresseur (2),
c) la comparaison des gradients de pression grd_pᵥ à une valeur limite de gradient grd_p_{G} prédéfinie respectivement actuelle dépendant de la vitesse de rotation, laquelle ne prend pas en compte le prélèvement d'air comprimé par les consommateurs,
d) l'émission d'un avertissement ou signal d'avertissement, lorsque le gradient de pression grd_pᵥ pendant un laps de temps de surveillance T_{M} prédéfini n'a pas dépassé la valeur limite de gradient grd_p_{G} respective.

3. Procédé selon la revendication 1 ou revendication 2, **caractérisé en ce que** les valeurs de variation de pression de la pression d'alimentation pᵥ, lesquelles reposent sur des effets thermodynamiques qui n'ont pas lieu dans les circuits consommateurs d'air comprimé après les consommations d'air comprimé, ne sont pas prises en compte.

4. Procédé selon l'une quelconque des revendications 1 à 3, **caractérisé en ce que** les valeurs de pression p_{v_i}, p_{v_i+1} détectées par capteur et/ou les valeurs des gradients de pression grd_pᵥ, grd_p_{v_w} calculées à partir de celles-ci sont filtrées par un filtre passe-bas.

5. Procédé selon la revendication 4, **caractérisé en ce que** les valeurs de pression p_{v_i,} p_{v_i+1} détectées par capteur et/ou les valeurs des gradients de pression grd_pᵥ, grd_p_{v_w} calculées à partir de celles-ci sont filtrées par un filtre passe-bas pendant un laps de temps T_{A} établi.

6. Procédé selon la revendication 4 ou 5, **caractérisé en ce que** les valeurs de pression p_{v_i}, p_{v_i+1} détectées par capteur et/ou les valeurs des gradients de pression grd_pᵥ, grd_p_{v_w} calculées à partir de celles-ci sont filtrées par un filtre passe-bas pendant un laps de temps T_{A} établi après l'apparition d'une chute plus importante de la pression d'alimentation pᵥ.

7. Procédé selon l'une quelconque des revendications 1 à 6, **caractérisé en ce que** le calcul des gradients de pression grd_pᵥ, grd_p_{v_w} est interrompu pendant un laps de temps T_{A}' établi après l'apparition d'une chute plus importante de la pression d'alimentation pᵥ.

8. Procédé selon l'une quelconque des revendications 1 à 7, **caractérisé en ce que** la valeur de gradient de pression grd_p_{W_G} est définie comme une fraction déterminée par un facteur d'adaptation f_{A} < 1 d'un gradient de pression grd_p_{C_W} pondéré caractéristique du compresseur (2), de l'installation d'alimentation en air comprimé (4) et des circuits consommateurs d'air comprimé (V21, V22, V23, V24, V25) raccordés (grd_p_{W_G} = f_{A} × grd_p_{C_W}).

9. Procédé selon la revendication 8, **caractérisé en ce que** le gradient de pression grd_p_{C_W} caractéristique est multiplié par un facteur d'adaptation f_{A} plus petit de manière correspondante, lorsque dans l'installation d'alimentation en air comprimé (4) ou dans un des circuits consommateurs d'air comprimé (V21, V22, V23, V24, V25), une consommation d'air comprimé permanente est présente.

10. Procédé selon la revendication 8 ou 9, **caractérisé en ce que** le gradient de pression grd_p_{C_W} caractéristique est déterminé à partir de la cylindrée V_{K} du compresseur (2), du rendement volumétrique ηV du compresseur (2) et du volume de stockage V_{S} de tous les circuits consommateurs d'air comprimé (V21, V22, V23, V24, V25).

11. Procédé selon l'une quelconque des revendications 1 à 10, **caractérisé en ce que** la période de surveillance T_{M} est définie comme le temps de fonctionnement cumulé du véhicule à moteur.

12. Procédé selon l'une quelconque des revendications 1 à 10, **caractérisé en ce que** la période de surveillance T_{M} est définie comme le parcours cumulé du véhicule à moteur.

13. Procédé selon l'une quelconque des revendications 1 à 10, **caractérisé en ce que** la période de surveillance T_{M} est définie comme la durée de fonctionnement de transport cumulée du compresseur.

14. Procédé selon l'une quelconque des revendications 1 à 13, **caractérisé en ce que** plusieurs comptes de défaillance sont tenus pour différentes causes de défaillance, et que le facteur d'adaptation f_{A} du gradient de pression grd_p_{C_W} caractéristique et/ou le type et la longueur de la période de surveillance T_{M} pour la surveillance de différentes causes de défaillance sont établis de manière différente.

15. Procédé selon l'une quelconque des revendications 1 à 14, **caractérisé en ce que** le calcul du gradient de pression grd_p_{v_W} pondéré de la pression d'alimentation pᵥ est effectué pour identifier des causes de défaillance déterminées uniquement dans une plage limitée de la pression d'alimentation pᵥ.

16. Procédé selon l'une quelconque des revendications 1 à 14, **caractérisé en ce que** le calcul du gradient de pression grd_p_{v_W} pondéré de la pression d'alimentation pᵥ est effectué pour identifier des causes de défaillance déterminées uniquement dans une plage limitée de la vitesse de rotation d'entraînement n_{K} du compresseur (2).

17. Procédé selon la revendication 15, **caractérisé en ce qu'**un embrayage à friction effectuant un glissement du compresseur (2) est identifié du fait que le gradient de pression grd_p_{v_W} pondéré dans une plage supérieure de la pression d'alimentation pᵥ n'a pas dépassé la valeur de gradient de pression grd_p_{G_W} pendant la période de surveillance T_{M} prédéfinie.

18. Procédé selon la revendication 16, **caractérisé en ce qu'**un embrayage à friction effectuant un glissement du compresseur (2) est identifié du fait que le gradient de pression grd_p_{v_W} pondéré dans une plage supérieure de la vitesse de rotation d'entraînement n_{K} du compresseur (2) n'a pas dépassé la valeur de gradient de pression grd_p_{G_W} pendant la période de surveillance T_{M} prédéfinie.

19. Procédé selon l'une quelconque des revendications 1 à 18, **caractérisé en ce que** pour éviter une consommation d'air comprimé permanente dans l'installation d'alimentation en air comprimé, une soupape de limitation de pression (30) avec hystérèse y est utilisée.
